Europäisches Patentamt

European Patent Office

Office européen des brevets

(11) Veröffentlichungsnummer: **0 272 619 B1**

# EUROPÄISCHE PATENTSCHRIFT

(45) Veröffentlichungstag der Patentschrift: **29.01.92**

(51) Int. Cl.⁵: **F01N 3/02**

(21) Anmeldenummer: **87118710.0**

(22) Anmeldetag: **17.12.87**

(54) **Verfahren und Vorrichtung zum Abbrennen des in einem Russfilter einer luftverdichtenden Brennkraftmaschine angesammelten Russes.**

(30) Priorität: **18.12.86 DE 3643315**

(43) Veröffentlichungstag der Anmeldung:
**29.06.88 Patentblatt 88/26**

(45) Bekanntmachung des Hinweises auf die
Patenterteilung:
**29.01.92 Patentblatt 92/05**

(84) Benannte Vertragsstaaten:
**AT DE FR GB IT SE**

(56) Entgegenhaltungen:
**WO-A-86/04641**
**DE-A- 3 408 057**
**DE-A- 3 527 578**
**DE-C- 3 538 109**
**DE-C- 3 602 038**

**PATENT ABSTRACTS OF JAPAN, Band 6, Nr.**
**146 (M-147)[1024], 5. August 1982; & JP-A-57**
**65 811 (TOYO KOGYO K.K.) 21-04-1982**

**PATENT ABSTRACTS OF JAPAN, Band 9, Nr.**
**252 (M-420)[1975], 9. Oktober 1985; & JP-A-60**
**104 747 (MITSUBISHI JIDOSHA KOGYO K.K.)**
**10-06-1985**

(73) Patentinhaber: **Klöckner-Humboldt-Deutz AG**
**Otto Strasse 1**
**W-5000 Köln 90(DE)**

(72) Erfinder: **Die Erfinder haben auf ihre Nennung verzichtet**

## Beschreibung

Die Erfindung betrifft ein Verfahren und eine Vorrichtung gemäß dem Oberbegriff des Anspruchs 1.

Aus der DE-OS 29 30 969 ist eine Rußabbrennvorrichtung für luftverdichtende Brennkraftmaschinen bekannt, bei der der Abbrennvorgang des in einem Rußfilter angesammelten Rußes dann eingeleitet wird, wenn der Staudruck des Abgasstromes in dem Rußfilter durch herausgefilterten und die Poren des Rußfilters zusetzenden Rußes einen bestimmten, fest vorgegebenen Wert überschreitet. Ist dieser Staudruckwert überschritten wird eine Drosselklappe in der Abgasleitung geschlossen und der auf dem Rußfilter angesammelte Ruß entzündet sich infolge der durch den zusätzlichen Drosselvorgang erhöhenden Temperatur des Abgasstromes. Nachteilig an diesem Abbrennvorgang ist es, daß der Abbrennvorgang unkontrolliert bei jedem Betriebszustand der Brennkraftmaschine einsetzt, sobald ein fest vorgegebener Staudruck überschritten wird. Insbesondere bei Lastbetrieb der Brennkraftmaschine führt der einsetzende Abbrennvorgang zu kritischen Situationen, da durch die zusätzlich eingeleitete Drosselung des Abgasstromes die Leistungsabgabe der Brennkraftmaschine zwangsläufig reduziert wird. Eine derartige, unkontrolliert einsetzende Leistungsreduzierung ist aber bei den meisten Einsatzarten einer derartig ausgerüsteten Brennkraftmaschine nicht hinnehmbar, so beispielsweise, wenn ein mit einer derartigen Brennkraftmaschine ausgerüsteter LKW während eines Überholvorgangs plötzlich Leistung verliert, da Ruß abgebrannt wird.

Die WO 86/0 46 41 beschreibt eine Rußabbrennvorrichtung, die auf das Problem des sicheren Vollastbetriebs hinweist. Um diesen zu gewährleisten, wird die Regenerationsphase in einen mittleren Teillastbereich oberhalb einer Drehzahl von 2000 U/min gelegt. Bei einem plötzlichen Vollastbetrieb besteht aber die Gefahr der Beschädigung des Rußfilters, wenn der Abbrennungsvorgang nicht genügend schnell stoppt und das Rußfilter überhitzt wird.

Der Erfindung liegt die Aufgabe zugrunde, ein Verfahren und eine Vorrichtung zum Abbrennen des in einem Rußfilter einer Brennkraftmaschine angesammelten Rußes zu schaffen, wobei der Abbrennvorgang ohne Beeinträchtigung der Leistungsabgabe der Brennkraftmaschine eingeleitet wird.

Diese Aufgabe wird erfindungsgemäß dadurch gelöst, daß der Abbrennvorgang ausschließlich bei leistungsabgabefreiem Betrieb mit erhöter Leerlaufdrehzahl der Brennkraftmaschine eingeleitet wird und durch zumindest einen der Parameter: Abgabe von Leistung, Ablauf einer vorgebbaren Zeitspanne oder fallende Temperatur gestoppt wird. Dadurch ist sichergestellt, daß kritische Betriebsfälle eines mit einer derartigen Brennkraftmaschine ausgerüsteten Fahrzeugs oder Gerätes nicht eintreten können.

Zur Durchführung des erfindungsgemäßen Verfahrens ist eine Steuervorrichtung vorgesehen, mittels der bei beladenem Rußfilter die Leerlaufdrehzahl bei leistungsabgabefreiem Betrieb der Brennkraftmaschine erhöht und die Drossel soweit geschlossen wird, bis der zum Einleiten des Abbrennvorganges nötige Abgasgegendruck aufgestaut ist und wobei von der Steuervorrichtung bei: Abgabe von Leistung, Ablauf einer vorgebbaren Zeitspanne oder fallender Temperatur die Drossel wieder geöffnet wird. Dabei wird die Steuervorrichtung beispielsweise von einer Bedienperson betätigt, der durch beispielsweise eine betriebszeitabhängig arbeitende Signaleinrichtung mitgeteilt wird, daß ein Abbrennvorgang im leistungsabgabefreien Betrieb bei erhöter Leerlaufdrehzahl einzuleiten ist.

In Weiterbildung der Vorrichtung ermittelt eine Steuereinrichtung in Abhängigkeit von zumindest einem Brennkraftmaschinenparameter die Beladung des Rußfilters und erhöht bei beladenem Rußfilter die Leerlaufdrehzahl bei leistungsabgabefreiem Betrieb der Brennkraftmaschine und schließt die Drossel soweit, bis der zum Einleiten des Abbrennvorganges notwendige Abgasgegendruck aufgestaut ist.

Dabei wird als Brennkraftmaschinenparameter zumindest ein Meßwert der Steuereinrichtung zugeführt. Der in der Abgasleitung stromaufwärts des Rußfilters herrschende Abgasgegendruck wird in der einfachsten Ausführung als Maß für die Beladung des Rußfilters herangezogen. In weiterführender Ausgestaltung wird der Abgasgegendruckmeßwert mit dem augenblicklichen Drehzahlwert der Brennkraftmaschine und gegebenenfalls auch mit dem augenblicklichen Lastzustand der Brennkraftmaschine, der beispielsweise durch die Stellung der Regelstange erfaßt wird, korrigiert bzw. verglichen. Dadurch wird eine genauere Bestimmung der Beladungsmenge des Rußfilters ermöglicht. Hat die Steuereinrichtung eine Beladungsmenge des Rußfilters ermittelt, die ein Abbrennen des in dem Filter angesammelten Rußes erforderlich macht, wird mittels der Regelstangenstellung festgestellt, ob leistungsabgabefreier Betrieb der Brennkraftmaschine vorliegt. Ist dies der Fall, wird anhand eines Drehzahl-Meßwertaufnehmers überprüft, ob die Brennkraftmaschine mit erhöter Leerlaufdrehzahl betrieben wird. Ist dies ebenfalls der Fall, steuert die Steuereinrichtung die in der Abgasleitung eingesetzte Drossel so weit zu, daß der für das Erreichen der Selbstentzündungstemperatur des Rußes nötige Abgasgegendruck eingestellt wird.

Wird bei Abfrage der Drehzahl der Brennkraftmaschine festgestellt, daß die Leerlaufdrehzahl bei leistungsabgabefreiem Betrieb und einzuleitendem Abbrennvorgang zu niedrig ist, um den nötigen Abgasgegendruck aufzubauen, ist es bei einer weitergebildeten Steuereinrichtung vorgesehen, daß ein entsprechender Befehl von der Steuereinrichtung an die Drehzahlregeleinrichtung der Einspritzpumpe zur Erhöhung der Leerlaufdrehzahl auf den gewünschten Wert gesendet wird.

In Weiterbildung der Erfindung ist vorgesehen, daß die Steuereinrichtung die Drossel öffnet, sobald ein vorgebbarer Lastwert der Brennkraftmaschine beispielsweise durch eine entsprechende Stellung der Regelstange der Einspritzpumpe gemessen wird. Diese Weiterbildung hebt sofort die Drosselung des Abgasgegendrucks auf, wenn der Brennkraftmaschine Leistung abverlangt wird. Die Reduzierung des Abgasgegendrucks wird auch auf die Möglichkeit einer Unterbrechung des Abbrennvorgangs hin vorgenommen.

In Weiterbildung der Erfindung werden der Steuereinrichtung Temperaturmeßwerte des Abgases in der Abgasleitung und in bzw. hinter dem Rußfilter zugeleitet. Bei fallenden Temperaturmeßwerten und vorher eingeleitetem Abbrennvorgang gibt die Steuereinrichtung ein Signal zum Öffnen der Drossel. Durch das Absinken der Temperaturen in dem Rußfilter erkennt die Steuereinrichtung, daß der Abbrennvorgang beendet ist und demzufolge die Drossel wieder geöffnet werden kann. Alternativ ist es auch vorgesehen, das Ende des Abbrennvorgangs über den fallenden Abgasgegendruck in dem Rußfilter zu erfassen und die Drossel auf diese Weise evtl. noch zusätzlich über die Temperaturerfassung zu steuern. Weiterhin ist es erfindungsgemäß vorgesehen, daß die Steuereinrichtung nach einer vorgebbaren Zeitspanne das Öffnen der geschlossenen Drossel veranlaßt. Diese Steuerung kann alleinig oder in Ergänzung zu der Temperatur- und/oder Abgasgegendrucksteuerung eingesetzt werden.

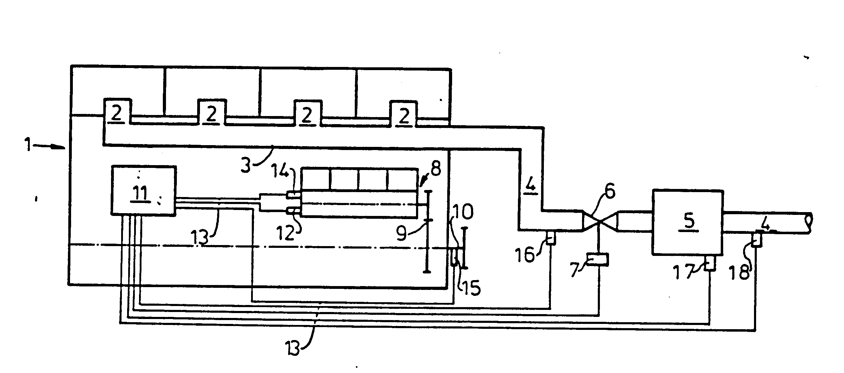

Weitere erfindungsgemäße Ausgestaltungen der Erfindung ergeben sich aus der Zeichnungsbeschreibung, in der das in der Figur dargestellte Ausführungsbeispiel der Erfindung beschrieben ist.

Die in der einzigen Figur dargestellte Brennkraftmaschine 1 ist eine selbstzündende, luftverdichtende Brennkraftmaschine beliebiger Bauart. Von den Auslaßkanälen der einzelnen Zylinder führen Kanäle 2 in eine Abgassammelleitung 3, die in die Abgasleitung 4 übergeht. In die Abgasleitung 4 ist ein Rußfilter 5 eingesetzt, durch das der gesamte Abgasstrom der Abgasleitung 4 geleitet wird. In dem Teilstück der Abgasleitung 4 zwischen der Brennkraftmaschine 1 und dem Rußfilter 5 ist eine Drossel 6 eingesetzt, die beispielsweise über ein mechanisch, hydraulisch, elektrisch oder elektropneumatisch betätigbares Stellelement 7 kontinuierlich geöffnet und geschlossen werden kann.

Weiterhin weist die Brennkraftmaschine 1 eine Einspritzpumpe 8 auf, die über ein Untersetzungsgetriebe 9 von der Kurbelwelle 10 der Brennkraftmaschine angetrieben wird. An geeigneter Stelle der Brennkraftmaschine 1 oder einer sonstigen geeigneten Haltevorrichtung ist eine Steuereinrichtung 11 befestigt. Die Steuereinrichtung 11 ist über signalübertragende Leitungen 13 mit Stellelementen 7, 12 sowie mit Meßwertaufnehmern 14, 15, 16, 17 ,18 verbunden. Dabei ist der Meßwertaufnehmer 14 an der Einspritzpumpe 8 angeordnet und erfaßt die augenblickliche Stellung der Regelstange der Einspritzpumpe 8. Von der Kurbelwelle 10 wird mittels des Meßwertaufnehmers 15 die Drehzahl der Brennkraftmaschine abgegriffen, während die Meßwertaufnehmer 16, 17, 18 kombinierte Temperatur- und Druck- Meßwertaufnehmer sind. Das Stellelement 7 zur Betätigung der Drossel übermittelt zudem an die Steuereinrichtung 11 die augenblickliche Stellung der Drossel. Ebenso verstellt das Stellelement 12 den entsprechenden Regelhebel der Einspritzpumpe 8 und übermittelt gleichzeitig die entsprechende Stellung des Regelhebels an die Steuereinrichtung 11.

Beim Betrieb der Brennkraftmaschine 1 wird über die Kanäle 2 Abgas in die Abgassammelleitung 3 eingespeist, von der aus das Abgas über eine Abgasleitung 4 und eine Drossel 6 in ein Rußfilter 5 gelangt, um von dort stromabwärts des Rußfilters 5 über die Abgasleitung 4 weitergeleitet zu werden. Kombinierte Druck- und Temperatur-Meßwertaufnehmer 16, 17, 18 ermitteln den Druck und die Temperatur des Abgasstromes stromaufwärts der Drossel 6, in dem Rußfilter 5 und stromabwärts des Rußfilters 5. Die entsprechenden Signale werden über signalübertragende Leitungen 13 der Steuereinrichtung 11 mitgeteilt. Die Steuereinrichtung 11 ermittelt aus den eingehen Signalen, ob das Rußfilter 5 so weit mit Ruß beladen ist, daß der angesammelte Ruß abgebrannt werden muß. Dabei wird man einen solchen Grenzwert über den Beladungszustand in der Steuereinrichtung 11 einspeichern, der noch eine gewisse weitere Beladung des Rußfilters 5 ermöglicht, ohne daß infolge einer Überladung des Rußfilters 5 ein zu hoher Abgasgegendruck stromaufwärts des Rußfilters 5 entsteht und während des Abbrennens des gesamten Rußes eine Überhitzung des Rußfilters eintritt und der Rußfilter eventuell zerstört wird.

Hat die Steuereinrichtung 11 festgestellt, daß der Ruß von dem Rußfilter 5 abgebrannt werden muß, überpüft sie anhand des Last-Meßwertaufnehmers 14 und des Drehzahl-Meßwertaufnehmers 15, ob leistungsabgabefreier Betrieb bei erhöhter Leerlaufdrehzahl der Brennkraftmaschine vorliegt. Ist beides der Fall, sendet die Steuereinrichtung 11 ein Signal aus, das das Stellelement 7 veranlaßt, die Drossel 6 zu schließen. Signalisiert nur der Last-Meßwertaufnehmer 14 leistungsabgabefreien Betrieb, während der Drehzahl-Meßwertaufnehmer 15 niedrige Leerlaufdrehzahl signalisiert, wird das Stellelement 12 veranlaßt, den Regelhebel der Einspritzpumpe 8 auf hohe Leerlaufdrehzahl einzustellen. Daraufhin gibt die Steuereinrichtung 11 den Befehl an das Stellelement 7 zum Schließen der Drossel 6 soweit, daß der zum Abbrennen des Rußes erforderliche Abgasgegendruck erreicht wird. Wird von den Meßwertaufnehmern 14, 15 weder leistungsabgabefreier Betrieb noch erhöhte Leerlaufdrehzahl an die Steuereinrichtung 11 gemeldet, wird der Befehl zum Abbrennen des Rußes solange in der Steuereinrichtung 11 gespeichert, bis zumindest der Last-Meßwertaufnehmer 14 leistungsabgabefreien Betrieb der Brennkraftmaschine an die Steuereinrichtung 11 signalisiert.

Ist die Drossel 6 schließlich geschlossen und der Ruß wird von dem Rußfilter 5 abgebrannt, werden die aktuellen Temperatur-Meßdaten von den Temperatur-Meßwertaufnehmern 16, 17, 18 abgerufen, um festzustellen, daß die Temperatur in dem Rußfilter 5 absinkt. Daraufhin wird die Drossel 6 wieder geöffnet und der Abbrennvorgang ist abgeschlossen.

Wird dagegen während des Abbrennvorgangs von dem Last-Meßwertaufnehmer 14 festgestellt, daß die Brennkraftmaschine 1 nicht mehr im leistungsabgabefreien Betrieb betrieben wird, wird ebenfalls die Drossel 6 geöffnet, um den Abbrennvorgang zu unterbrechen, damit die Brennkraftmaschine 1 ihre volle Leistung abgeben kann.

Die Steuereinrichtung 11 ist erfindungsgemäß mit einer Steuerelektronik, die die gesamte Motorfunktion, insbesondere den Einspritzvorgang bzw. die Einspritzsteuerung überwacht und beherrscht, koppelbar.

## Patentansprüche

1. Verfahren zum Abbrennen des in einem Rußfilter (5) einer luftverdichtenden Brennkraftmaschine (1) eines Fahrzeugs angesammelten Rußes, wobei zumindest der Abgasgegendruck zur Bestimmung der Beladung des Rußfilters (5) ermittelt wird und der Abbrennvorgang durch eine Temperaturerhöhung des in das Rußfilter (5) gelangenden Abgases eingeleitet wird, indem das Abgas durch eine in die Abgasleitung (4) eingesetzte Drossel (6) verdichtet wird,
dadurch gekennzeichnet, daß der Abbrennvorgang bei leistungsabgabefreiem Betrieb mit erhöhter Leerlaufdrehzahl eingeleitet wird und der Abbrennvorgang durch zumindest einen der Parameter: Abgabe von Leistung, Ablauf einer vorgebbaren Zeitspanne oder fallende Temperatur gestoppt wird.

2. Vorrichtung zur Durchführung des Verfahrens nach Anspruch 1 zum Abbrennen des in einem Rußfilter (5) angesammelten Rußes, wobei Mittel zur Bestimmung der Beladung des Rußfilters vorgesehen sind und in der Abgasleitung (4) eine Drossel (6) eingesetzt ist, die zur Erhöhung des Abgasgegendruckes und der Abgastemperatur schließbar ist,
dadurch gekennzeichnet, daß eine Steuervorrichtung vorgesehen ist, mittels der bei beladenem Rußfilter (5) die Leerlaufdrehzahl bei leistungsabgabefreiem Betrieb der Brennkraftmaschine (1) erhöht und die Drossel (6), die stromaufwärts des Rußfilters (5) in die Abgasleitung (4) eingesetzt ist, soweit geschlossen wird, bis der zum Einleiten des Abbrennvorganges nötige Abgasgegendruck aufgestaut ist und wobei von der Steuervorrichtung bei: Abgabe von Leistung, Ablauf einer vorgebbaren Zeispanne oder fallender Temperatur die Drossel wieder geöffnet wird.

3. Vorrichtung nach Anspruch 2,
dadurch gekennzeichnet, daß eine Steuereinrichtung (11) in Abhängigkeit von zumindest einem Brennkraftmaschinenparameter die Beladung des Rußfilters ermittelt und bei beladenem Rußfilter (5) die Leerlaufdrehzahl bei leistungsabgabefreiem Betrieb der Brennkraftmaschine (1) erhöht und die Drossel (6) soweit schließt, bis der zum Einleiten des Abbrennvorganges nötige Abgasgegendruck aufgestaut ist.

4. Vorrichtung nach Anspruch 2 oder 3,
dadurch gekennzeichnet, daß die Steuereinrichtung (11) die Drossel (6) zufolge zumindest eines einem vorgebbaren Lastwert entsprechenden Motorparameter-Signales öffnet.

5. Vorrichtung nach einem der Ansprüche 2 bis 4,
dadurch gekennzeichnet, daß die zumindest von einem Temperatur-Meßwertaufnehmer (17, 18) abgegebenen Signale von der Steuereinrichtung (11) mit der Stellung der Drossel (6) verglichen werden, um bei geschlossener Drossel (6) und fallenden Temperaturmeßwerten das Öffnen der Drossel (6) zu veranlassen.

6. Vorrichtung nach einem der Ansprüche 2 bis 5,
dadurch gekennzeichnet, daß die Steuereinrichtung (11) nach einer vorgebbaren Zeitspanne das Öffnen der geschlossenen Drossel (6) veranlaßt.

## Claims

1. A method of burning off the soot accumulating in a soot filter (5) of an air-compressing internal combustion engine (1) for a vehicle, at least the back pressure of the exhaust gas being measured in order to determine the load on the soot filter (5), and the burning-off process being introduced by increasing the temperature of the exhaust gas reaching the soot filter (5) by compressing the exhaust gas through a throttle (6) inserted into the exhaust-gas pipe (4), characterised in that the burning-off process is initiated during operation without power delivery and at elevated idling speed, and the burning-off process is stopped by at least one of the following parameters: power delivery, elapse of a specified time or falling temperature.

2. A device for working the method according to claim 1 for burning off the soot accumulating in a soot filter (5), means for determining the load on the soot filter being provided and a throttle (6) being inserted in the exhaust-gas pipe (4) and closable in order to increase the back pressure and the temperature of the exhaust gas, characterised in that a control device is provided by means of which the idling speed is increased when the soot filter (5) is loaded and the internal combustion engine (1) is operating without power delivery, and the throttle (6), which is inserted in the exhaust-gas pipe (4) upstream of the soot filter (5), is closed until the back-pressure of exhaust gas necessary for initiating the burning-off process has built up, and the throttle is re-opened by the control device when power is delivered or a preset time has elapsed or the temperature drops.

3. A device according to claim 2, characterised in that a control device (11) determines the load on the soot filter in dependence on at least one parameter of the internal combustion engine and, when the soot filter (5) is loaded, the control device increases the idling speed when the engine (1) is operating without power delivery and closes the throttle (6) until the back pressure of exhaust gas necessary for initiating the burning-off process has built up.

4. A device according to claim 2 or 3, characterised in that the control device (11) opens the throttle (6) as a result of at least one engine parameter signal corresponding to a presettable load value.

5. A device according to any of claims 2 to 4, characterised in that the signals delivered at least by a temperature measurement sensor (17, 18) are compared by the control device (11) with the position of the throttle (6), in order to open the throttle (6) when the throttle (6) is closed and the temperature is falling.

6. A device according to any of claims 2 to 5, characterised in that the control device (11) opens the closed throttle (6) after a presettable time.

## Revendications

1. Procédé de régénération d'un filtre à suie (5) d'un moteur à combustion interne à compression d'air, dans lequel on mesure au moins la contrepression des gaz d'échappement pour déterminer la charge du filtre à suie (5) et on provoque le processus de combustion par augmentation de température du gaz d'échappement parvenant dans le filtre à suie (5), en comprimant le gaz d'échappement par une vanne d'étranglement (6) installée sur la tubulure (4) de gaz d'échappement, caractérisé en ce qu'on provoque le processus de combustion pour un régime sans demande de puissance à une vitesse de ralenti très élevée et qu'on arrête le processus de combustion par au moins l'un des paramètres : demande de puissance, écoulement d'une période de temps fixée ou chute de température.

2. Dispositif de réalisation du procédé selon la revendication 1 pour brûler la suie accumulée dans un filtre à suie (5), des moyens étant prévus pour déterminer la charge du filtre à suie et on place dans la tubulure de gaz d'échappement (4) une vanne d'étranglement (6), qu'on peut fermer pour augmenter la contrepression du gaz d'échappement et la température du gaz d'échappement, caractérisé en ce qu'on prévoit un dispositif de commande au moyen duquel, lorsque le filtre à suie (5) est chargé, on augmente la vitesse de ralenti pour un régime ne délivrant pas de puissance au moteur à combustion interne (1) et on ferme la vanne (6) qui est placée en amont du filtre à suie (5) sur la tubulure de gaz d'échappement (4), jusqu'à ce que soit remontée la contrepression de gaz d'échappement nécessaire à l'initiation du processus de combustion, et dans lequel le dispositif de commande ouvre à nouveau la vanne lors de : remise de puissance, écoulement d'une période de temps fixée au préalable ou diminution de température.

3. Dispositif selon la revendication 2, caractérisé en ce qu'un dispositif de commande (11) détermine, en fonction d'au moins un paramètre du moteur à combustion, la charge du filtre à suie et augmente, lorsque le filtre à suie (5) est chargé la vitesse de ralenti grâce à la marche sans demande de puissance du moteur à combustion interne (1) et ferme la vanne (6) jusqu'à ce que la contrepression de gaz d'échappement nécessaire augmente pour provoquer le processus de combustion.

4. Dispositif selon la revendication 2 ou 3, caractérisé en ce que le dispositif de commande (11) ouvre la vanne d'étranglement (6) selon au moins un signal du paramètre du moteur correspondant à une valeur de charge prédéfinie.

5. Dispositif selon l'une des revendications 2 à 4, caractérisé en ce qu'on compare les signaux émis par au moins un capteur de température (17, 18) du dispositif de commande (11) à la position de la vanne (6), pour provoquer l'ouverture de la vanne (6) quand la vanne (6) est fermée et quand les valeurs de température diminuent.

6. Dispositif selon l'une des revendications 2 à 5, caractérisé en ce que le dispositif de commande (11) provoque après une certaine période de temps prédéterminée l'ouverture de la vanne (6) fermée.

EP 0 272 619 B1